# EUROPEAN PATENT APPLICATION

(11) **EP 1 191 203 A2**
(43) Date of publication of application: **27.03.2002**
(21) Application number: 01122977.0
(22) Date of filing: 25.09.2001
(51) Int. Cl.: F02B 75/22, F16F 15/26

(54) **Arrangement for mass balancing a v-type internal combustion engine**

(30) Priority: 26.09.2000 US 234906 P
(71) Applicant: Bombardier-Rotax GmbH, 4623 Gunskirchen (DE)
(72) Inventor: Korenjak, Norbert, 4651 Stadl Paura (AT)
(74) Representative: Solf, Alexander, Dr.

(57) **Abstract**

An arrangement of an internal combustion engine is disclosed that balances the various inertia forces acting on the engine during operation. A plurality of counterweight assemblies are provided that counterbalance the forces generated during engine operation. A first counterweight assembly rotates about the crankshaft axis. Second and third counterweight assemblies are provided that are spaced from the crankshaft axis and the first counterweight assembly. The first, second and third counterweight assemblies combine to counteract and balance the inertia forces generated during operation of the engine.

## Description

### CROSS-REFERENCE TO RELATED APPLICATION

This application claims priority from U.S. Provisional Serial No. 60/234,906, filed September 26, 2000, and is incorporated herein in its entirety by reference.

### BACKGROUND OF THE INVENTION

### Field of the Invention

The present invention relates to the balancing of various inertia forces on an V-type engine. In particular, the present invention relates to the balancing of the inertia forces on a two (2) cylinder V-type internal combustion engine.

### Description of Related Art

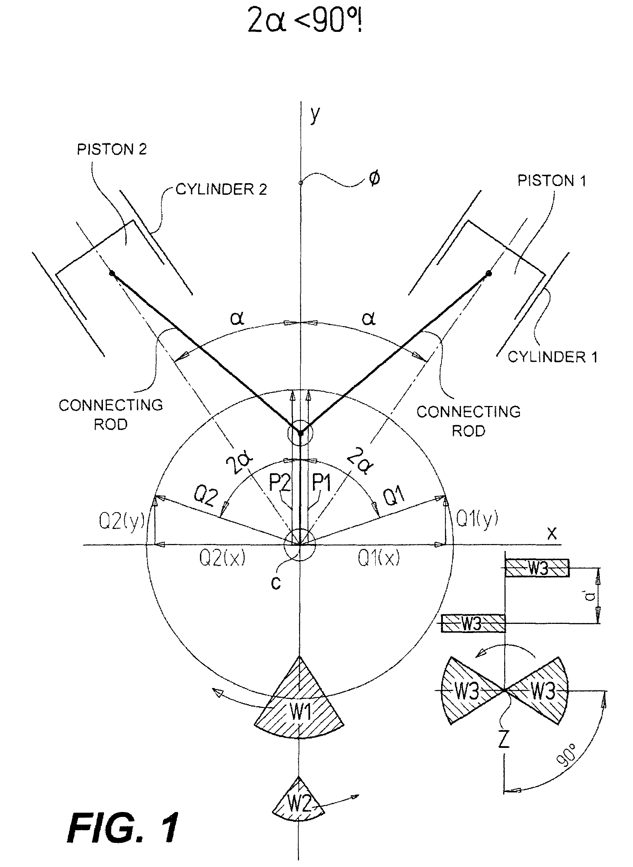

Fig. 1 illustrates the principal inertia forces of first order acting on a dual V-type engine. In this example, the crankshaft position is defined such that the crankpin is positioned in a symmetry plane φ between Cylinder 1 and Cylinder 2, as shown in Fig. 1. Each cylinder includes a piston that is connected to a connecting rod. The connecting rods for the pistons are connected to a common crankpin. There are two pairs of inertia forces acting on the cylinders. Forces P₁ and Q₁ act on Cylinder 1 and forces P₂ and Q₂ act on Cylinder 2. Forces P₁ and P₂ are parallel to the y axis and rotate in the same direction and at the same speed as the crankshaft. Forces Q₁ and Q₂ are oriented at an angle +2α and -2α, respectively, relative to forces P₁ and P₂. Forces Q1 and Q2 rotate against the direction of the crankshaft but at the same speed. 2α is less than 90°. All of these forces have the same magnitude.

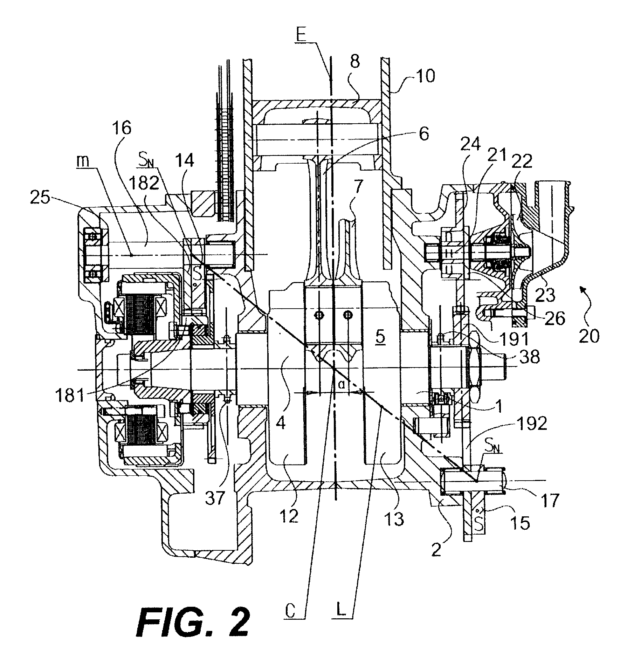

The forces P₁ and P₂ can be easily balanced by an opposite counterweight W₁ rotating in the same direction as the crankshaft around the center C. The forces Q₁ and Q₂ can be reduced into force components Q₁(x) and Q₂(x) aligned along the x axis and force components Q₁(y) and Q₂(y) aligned along the y axis. The force components Q₁(y) and Q₂(y) can be balanced by an opposite counterweight W₂ turning around the center C opposite to the crankshaft rotation but at the same speed. The connecting rods are usually attached to the common crankpin with a small offset a, as shown in Fig. 2. As such, the force components Q₁(x) and Q₂(x) induce a moment that can be balanced by a pair of counterweights W₃ with an offset a'. The counterweights W₃ pivot around the axis in the same direction and at the same speed as the counterweight W₂. The counterweight W₃ are offset at an angle of +90° and -90° respectively relative to the counterweight W₂. The Z axis is parallel to the crankshaft axis but otherwise can be positioned anywhere. The size of the counterweights W₃ can be reduced by increasing the offset a'.

There are several approaches commonly used today for balancing two cylinder V-type engines. A common way to accomplish this is to choose an angle equal or close to a 90° angle between the cylinder center axis such that the components Q₁(y) and Q₂(y) disappear or neutralize each other (2α = 90°) according to Fig. 1. The inertia forces P₁ and P₂ can be balanced with the counterweight W₁ attached to the crank webs and the mass moment induced by the pair of forces Q₁ and Q₂ and the offset a between the connecting rods can be balanced with the counterweight W₃. A perfect balancing of the mass forces of the first order can be accomplished and the pair of connecting rods can be attached to the same crankpin. A 90° angle, however, requires relatively large engine dimensions. These large engine sizes, however, are not acceptable for many applications. In motorcycle applications, for instance, a 90° angle design is impractical when the crankshaft axis is orientated either in the vehicle driving direction or crosswise.

In such applications, a V-type engines with a cylinder angle notedly smaller than 90° is necessary. Another approach for balancing the inertia forces for the engines is necessary. The connecting rods of each cylinder may be attached to two separate crankpins with an offset between the pins. The degree of the offset has to match the difference between the actually chosen cylinder angle and 90°. There are two notable disadvantages associated with this approach. First, the separated crankpins markedly increase the distance between the pair of connecting rods. This considerably enhances the induced mass moment. Second, the two crankpin design requires an intermediate crank web for coupling the two pins. Thus, the distance between the crankshaft bearings is comparatively large since three crank webs and two crankpins have to be accommodated between the bearings. This considerably reduces the stiffness of the crankshaft considerably and limits the engine design for use in low and medium speed and power applications.

For high-performance motorcycle engines, dual V-type engines are used. The engines have cylinder angles well below 90° and have a common crankpin for both connecting rods. These engines can be balanced by arranging a separate balance shaft parallel to the crankshaft. Due to the crank webs, however, the distance between the crankshaft and the balance shaft is relatively large. This induces an additional unbalance (mass moment) which itself has to be balanced by further counterweights. These counterweights preferably should be arranged far away from the crankshaft and balance shaft to keep the counterweights as low as possible. For example, the counterweights can be arranged in the cylinder head. This design, however, may require additional components, which makes the engine more expensive, causes higher friction losses and enhances noise emissions.

### OBJECTS OF THE INVENTION

It is an object of the present invention to provide an arrangement for balancing the inertia forces and moments of an engine that overcome the above-described deficiencies.

It is another object of the present invention to provide an arrangement for balancing the inertia forces and moments of a high performance dual V-type engine.

It is another object of the present invention to provide an arrangement for balancing the inertia forces and moments of a high performance dual V-type engine preferably for motorcycle applications.

It is yet another object of the present invention to provide an arrangement for balancing the inertia forces and moments of an engine that can be used to power engine accessories.

It is another object of the present invention to provide an arrangement for balancing the inertia forces and moments of an engine using multiple counterweight assemblies, wherein each counterweight assembly includes at least a pair of counterweights. Each of counterweight of the pair of counterweights is mounted on a separate balance shaft.

Additional objects and benefits of the present invention will be apparent in view of the figures and below described embodiments of the invention.

### SUMMARY OF THE INVENTION

The present invention is directed to an arrangement of an internal combustion engine that balances the various inertia forces acting on the engine during operation. The internal combustion engine in accordance with the present invention includes at least one pair of cylinders. The cylinders are preferably arranged at an angle with respect to each other to form a V-type engine configuration. Each cylinder contains a piston movably mounted therein and connected to a common crank pin of a crankshaft by means of a pair of connecting rods. The movement of these pistons and the connecting rods during operation generate the inertia forces on the engine, which may reduce operating efficiency, as described above in connection with the prior attempts to balance engines. In accordance with the present invention, the internal combustion engine includes a plurality of counterweight assemblies that counterbalance the forces generated during engine operation.

A first counterweight assembly is operatively connected to the crank webs of the crankshaft. The first counterweight assembly includes at least a pair of first counterweights. A first counterweight is associated with each crankweb. The first counterweights rotate about an axis that extends through the crankshaft, which operates the pistons. It is contemplated each of the first counterweights may be integrally formed with its corresponding crank web.

The internal combustion engine in accordance with the present invention further includes a second counterweight assembly for balancing forces acting on the engine. The second counterweight assembly is spaced from the crankshaft and the first counterweight assembly. The second counterweight assembly preferably includes at least a pair of second counterweights and mounting assemblies for securing the each of the second counterweights within the engine. The second counterweights are preferably mounted on separate shafts that are located in the crankcase and driven by the crank shaft. The location of the second counterweights aids in the balancing of the forces generated during operation of the engine without increasing the size of the engine. It is contemplated that each of the second counterweights may be located on one side of the axis extending through the crankshaft.

The present invention, however, is not limited to this arrangement; rather, it is contemplated that the second counterweights may be located on opposite sides of the crankshaft axis. A plane E extends between the cylinders. The plane intersects the axis of the crankshaft at a centerpoint. One of the second counterweights is preferably located on one side of the plane and the other of the second counterweights is located on an opposite side of the plane. The second counterweights are arranged within the engine such that a line that extends through a center of mass of each of the second counterweights also extends through or near the centerpoint.

The internal combustion engine in accordance with the present invention also includes a third counterweight assembly for balancing forces acting on the engine. The third counterweight assembly is also spaced from the crankshaft and the first counterweight assembly. The third counterweight assembly preferably includes at least a pair of third counterweights, which are mounted to the engine crankcase with a suitable mounting assembly, such as for example a mounting or balance shaft. The second counterweights are preferably located on the same side of the axis of the crankshaft, but on opposite sides of the plane.

In accordance with the present invention, it is contemplated that one or more of the counterweights may be secured to the same mounting or balance shaft. For example, one of the third counterweights and one of the second counterweights may share a common mounting assembly. With this arrangement, the third counterweight is spaced from and positioned at angle with respect to the second counterweight. This reduces weight and the number of components required to balance the engine. With this in mind, it is contemplated that certain counterweights may be combined. For example, one of the third counterweights may be formed as a single unit with one of the second counterweights.

### BRIEF DESCRIPTION OF THE DRAWINGS

The invention will be described in conjunction with the following drawings in which like reference numerals designate like elements and wherein:
Fig. 1 is a schematic illustration of the inertia forces acting on a dual V-type engine having a common crankpin;
Fig. 2 is a cross sectional view of a V-type engine between a pair of cylinders illustrating an embodiment of the present invention;
Fig. 3 is a diagram illustrating the orientation of the second and third counterweight assemblies with respect to the crankshaft and the centerpoint for the V-type engine of Fig. 2;
Fig. 4 is a diagram illustrating a variation of the orientation of the second and third counterweight assemblies with respect to the crankshaft and the centerpoint for the V-type engine of Fig. 2;
Fig. 5 is a cross sectional view, similar to Fig. 2, illustrating another embodiment of the present invention;
Fig. 6 is a side schematic view illustrating the orientation of the counterweights of the second counterweight assembly with respect to the crankshaft and the pair of cylinders;
Fig. 7 is a cross sectional view, similar to Fig. 2, illustrating yet another embodiment of the present invention; and
Fig. 8 is a side schematic view illustrating the orientation of the counterweights of the second counterweight assembly with respect to the crankshaft and the pair of cylinders of the V-type engine of Fig. 7.

### DETAILED DESCRIPTION OF THE PREFERRED EMBODIMENTS

The arrangement for mass balancing a V-type internal combustion engine according to the present invention will now be described with reference to the embodiments shown in the accompanying drawings. The mass balancing arrangement will be disclosed in connection with a pair of cylinders. It is contemplated that each pair of cylinders will include a similar mass balancing arrangement disclosed herein.

In these embodiments, the present invention is applied to a four-cycle, two-cylinder V-type internal combustion engine having a common crank pin for both connecting rods. There is a 72° cylinder angle between the cylinder axis of the two cylinder. Other cylinder angles greater or less than 90° are contemplated. Furthermore, the present invention is not limited to four cycle engines; rather, any other type of V-type engine, e.g. two cycle engines, or four, six and/or eight cylinder engines are considered to be well within the scope of the present invention. The engines disclosed herein are capable of being used in personal watercraft, motorcycles, all terrain vehicles, snow mobiles, other vehicles and boats, and outboard motors for various boats.

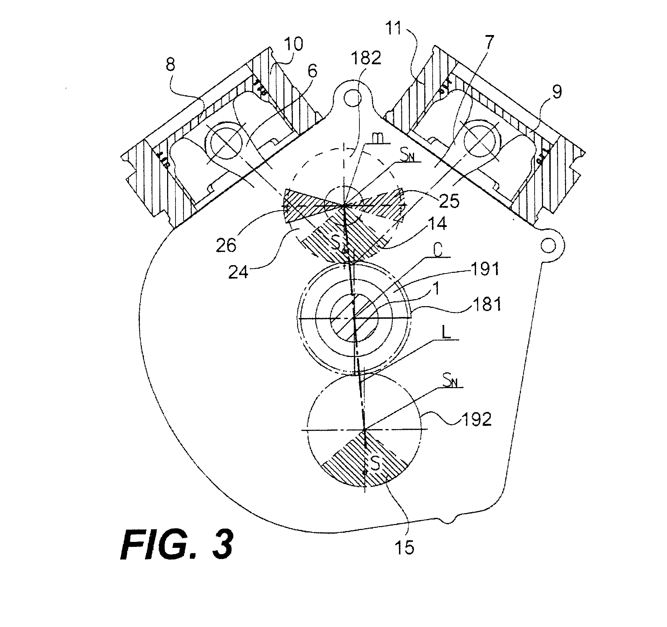

A first embodiment of the present invention will be described in connection with Figs. 2 and 3. The engine includes a crankshaft 1 rotatably mounted in a crankcase 2. A crank pin 3 is coupled to a pair of crank webs 4 and 5. A pair of connecting rods 6 and 7 are attached on one end to the crank pin 3 and on the other end to pistons 8 and 9, respectively. The pistons 8 and 9 are slidably fitted in cylinder bores 10 and 11. A plane E extends between the cylinders, as shown in Fig. 2.

The engine further includes a first counterweight assembly having at least two counterweights 12 and 13. The counterweights 12 and 13 are formed as part of the crank webs 4 and 5, respectively, as shown in Fig. 2. The present invention, however is not limited to counterweights that are integrally formed as part of the crankwebs. It is contemplated that the counterweights can be formed as separate components that are secured to the crankwebs. The first counterweight assembly and in particular the counterweights 12 and 13 correspond to the counterweight W₁. The engine further includes a second counterweight assembly having at least two counterweights 14 and 15 mounted on two separate balance shafts 16 and 17. The second counterweight assembly and in particular the counterweights 14 and 15 correspond to the counterweight W₂. The axis of the balance shafts 16 and 17 are aligned parallel to the crankshaft axis. In Figs. 2 and 3, the balance shafts 16 and 17 are located on opposite sides of the crankshaft axis. The balance shafts 16 and 17 are driven by the crankshaft 1 via toothed wheels 181, 182, 191, and 192 with a gear ratio of 1:1. The balance shafts 16 and 17 rotate in a direction opposite to the direction of rotation of the crankshaft.

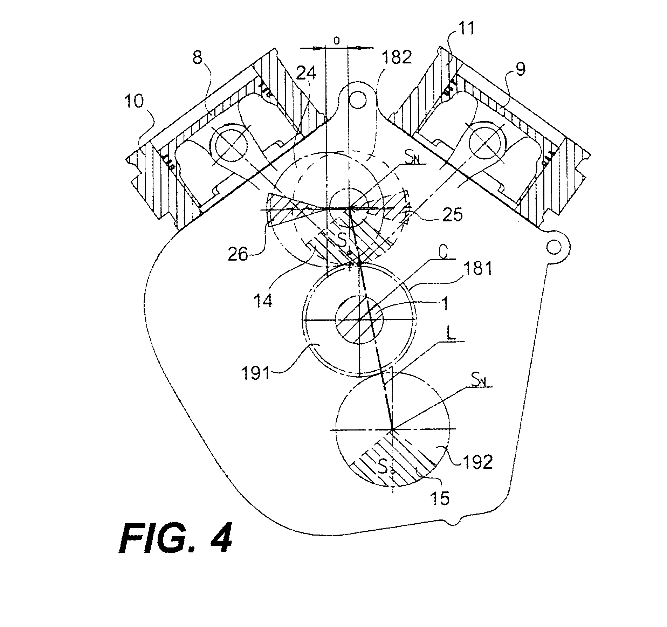

Since the counterweights 14 and 15 of the second counterweight assembly are not rotating around the crankshaft axis, the counterweights 14 and 15 are specially positioned in order to balance the mass force components Q₁(y) and Q₂(y). This special position is defined by a connecting line L intersecting the crankshaft axis exactly at its center point C, as shown in Figs. 2 and 3 or near the center point C, as shown in Fig. 4. The L is defined as a connecting line between the points S_{N}, which are orthogonal projections of the centers of mass S to the axis of the balance shafts 16 and 17. The center point C is defined as intersecting point of the plane E and the crankshaft axis. The counterweights 14 and 15 follow the lever relationship rule referring to the center point C where the line L acts as a lever.

The counterweights 14 and 15 balance the force components Q₁(y) and Q₂(y) and have to match the same requirements described previously in Fig. 1 in order to balance the mass forces of first order. Since the crankshaft position in Fig. 2 is the same as shown in Fig. 1 (crankpin positioned in the plan φ between the pair of cylinders) the counterweights 14 and 15 and their centers of mass S respectively have to be positioned exactly on the opposite side of the crankshaft axis referring to the crankpin, as shown in Fig. 2.

The engine further includes a water pump 20 having a water pump shaft 21, a propeller 22 and a water pump housing 23, as shown in Fig. 2. The water pump shaft 21 is driven via the toothed wheels 191 and 24 with a gear ratio of 1:1. The water pump shaft 21 rotates in a direction opposite to the crankshaft rotation. The axis of the water pump shaft 21 and the balance shaft 16 are coaxially aligned. The engine further includes a third counterweight assembly having additional counterweights 25 and 26 that are located on the shafts 21 and 16. The third counterweight assembly and in particular the additional counterweights 25 and 26 correspond to the counterweight W₃. The counterweights 25 and 26 of the third counterweight assembly balance the mass moment induced by the force components Q₁(x) and Q₂(x). The counterweight 25 is positioned at an angle of +90° / -90° relative to the counterweight 14, whereby the sign (+/-) depends on the orientation of the pair of cylinders. The counterweight 26 is positioned at an angle of approximately 180° relative to the counterweight 25. The counterweights 25 and 26 are of the same size and weight. The location of the counterweights 25 and 26 within in the engine may vary as long as the counterweights 25 and 26 are rotating around the same axis m, which is arranged parallel to the crankshaft axis, and the distance a' is correctly adjusted to balance the mass moment induced by the pair of force components Q₁(x) and Q₂(x) acting on the moment arm a. The counterweights 25 and 26 may share balance shafts with the counterweights 14 and 15. It is also contemplated that counterweights can be combined. For example, the counterweight 25 can be combined into the counterweight 14, which would result in one big counterweight with an orientation somewhere between the original orientations of the separate counterweights. It is also contemplated to integrate the counterweight 26 into the toothed wheel 24.

The above-described geometrical relationships may vary. These relationships may be approximated; rather than being exact. Construction and design reasons may require a departure from these relationships. For example, the connecting line L might intersect the crankshaft axis in the vicinity of the center point C or even pass the crankshaft axis, as shown in Fig. 4. In another example the axis of the water pump shaft 21 and the balance shaft 16 might not be aligned coaxially but be arranged by a little offset, as shown in Fig. 4. The slight departure causes a slight unbalance of first order which, however, in most cases might be acceptable. It is also conceivable to omit the counterweights 25 and 26. This, however, would produce a noticeable deterioration of the mass balancing and consequently a loss of comfort.

As shown in Fig. 2, the counterweight 26 is mounted on the water pump shaft 21. It, however, is contemplated that the counterweight 26 may be mounted on any other shaft that meets the following requirements: it is parallel to crankshaft axis; it is approximately aligned coaxially with one of the balance shafts 16 or 17; and it is rotating in a direction opposite to the crankshaft rotation. For example, it is contemplated that the counterweight may be located on the shaft of an oil pump, alternator or any other kind of accessory drives.

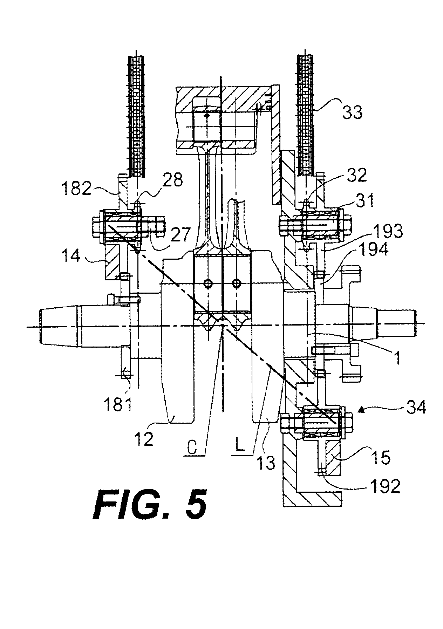

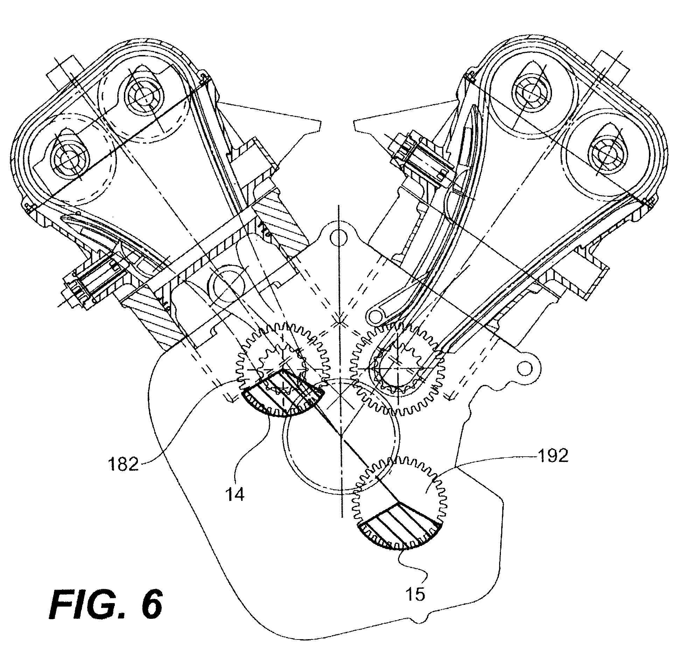

It is also contemplated that the balance shafts 16, 17 may be used to drive the valve train or engine accessory equipment. A multifunctional arrangement of this kind is shown in the embodiment of Fig. 5 and Fig. 6. In this arrangement, the counterweight 14 is directly mounted on the toothed wheel 182, which turn together around the fixed balance axle 27. It is contemplated that the axle 27 may be replaced by a balance shaft slidably pivoted in the engine housing, as shown for example in Fig. 2. A sprocket 28 is attached to the toothed wheel 182 and drives the valve train of a first cylinder of a 4-cycle V-type engine via a timing chain. On the opposite side of the engine there is an equivalent arrangement for driving the valve train of a second cylinder of the V-type engine having a first gear wheel 194 mounted on the crankshaft 1, a second gear wheel 193 pivoted on a fixed axle 31 and driven by the first wheel 194, and a sprocket 32 directly attached to the wheel 193 for driving a timing chain 33. There is no counterweight attached to the gear wheel 193.

The balancing of the mass force components Q₁(y) and Q₂(y) is accomplished using an additional balancing drive unit 34 as shown in Fig. 5. This arrangement provides an advantage over the arrangement shown in Fig. 2, where the timing chains are driven directly by the crankshaft 1 via sprockets 37 and 38. Typically, the gear ratio between the crankshaft and the camshaft in a 4-cycle engine is 2:1. As such, the diameter of the camshaft sprocket is twice as big as the sprocket on the crankshaft. For high performance engine applications (i.e., low weight/power ratio, low size/power ratio), it is desirable to keep the diameter of the sprocket on the camshaft as small as possible. This is especially true for double overhead camshaft ("DOHC") engines. The arrangement illustrated in Fig. 5 and Fig. 6 may be better suited for high performance applications as compared to the arrangement shown in Fig. 2. The diameter of the sprockets 37, 38 on the crankshaft 1 in Fig. 2 can not be reduced at will, since this would weaken the strength and stiffness of the crankshaft 1 too much. In Fig. 5, the sprockets 28 and 32 are mounted on the intermediate gear wheels 182 and 193. The sprockets 28 and 32 are not as limited by the dimension of the crankshaft. The diameter of the sprocket 28 can be reduced.

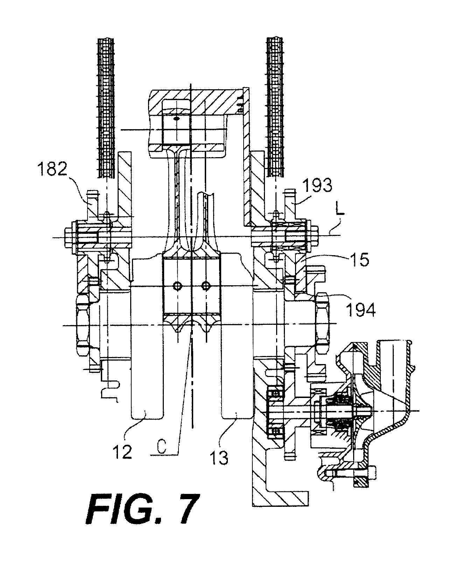

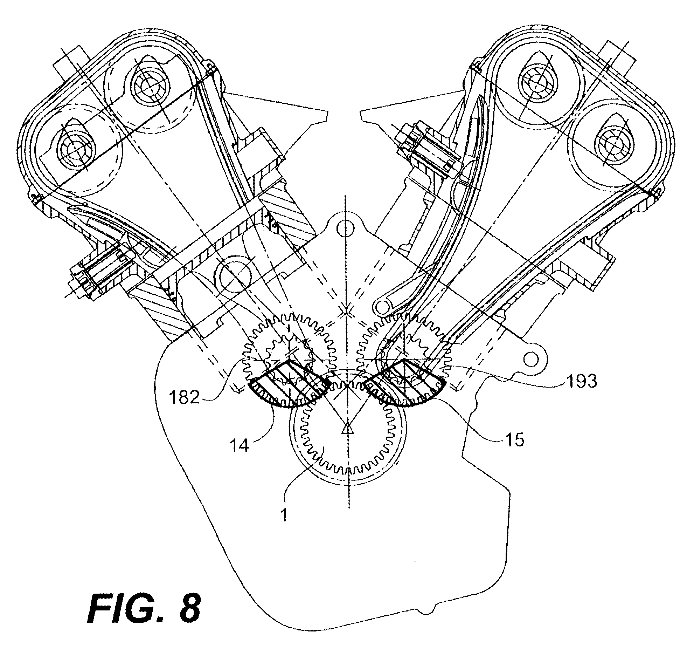

Another embodiment of the present invention is illustrated in Figs. 7 and 8. It is similar to the embodiment shown in Fig. 5. The balancing drive unit 34, however, is omitted entirely and that the counterweight 15 is mounted directly on the gear wheel 193. This arrangement simplifies the engine design. The connecting line L, however, passes through the crankshaft 1 away from the center point C, which results in some residual unbalance. Counterweights 25 and 26, discussed above, and not illustrated in Fig. 5-8 can be added. The counterweights 25 and 26 may be attached to the gear wheels 182 and 193. Alternatively, the counterweights 25 and 26 may be integrated directly into the counterweights 14 and 15. This way the mass moment effected by for force components Q₁(x) and Q₂(x) can be reduced but not be neutralized entirely since the counterweights 25 and 26 are not turning around the same axis.

As discussed above, it will be apparent to those skilled in the art that various modifications and variations may be made without departing from the scope of the present invention. Thus, it is intended that the present invention covers the modifications and variations of the invention, provided they come within the scope of the appended claims and their equivalents.

## Claims

1. A V-type internal combustion engine comprising:
at least one pair of cylinders, wherein each cylinder contains a piston movably mounted therein, wherein a plane extends between the at least two cylinders;
a crankcase;
a crankshaft rotatably mounted about an axis within the crankcase;
a crankpin spaced from the crankshaft;
a connecting rod corresponding to each cylinder, wherein each connecting rod is rotatably connected at one end to the crankpin and connected at an opposite end to the piston;
at least one crank web movably connecting the crankpin to the crankshaft;
a first counterweight assembly for balancing forces acting on the engine, wherein the first counterweight assembly is operatively connected to the at least one crank web; and
a second counterweight assembly for balancing forces acting on the engine, wherein the second counterweight assembly is spaced from the crankshaft and the first counterweight assembly, wherein the second counterweight assembly includes at least a pair of second counterweights, wherein each of the second counterweights is mounted on a separate shaft.

2. The internal combustion engine according to claim 1, wherein one of the second counterweights is located on one side of the plane and the other of the second counterweights is located on an opposite side of the plane.

3. The internal combustion engine according to claim 2, wherein each of the second counterweights is located on a same side of the axis.

4. The internal combustion engine according to claim 3 wherein the internal combustion engine is a V-type internal combustion engine such the cylinders of the pair of cylinders are arranged at an angle with respect to each other.

5. The internal combustion engine according to claim 3, further comprising: a third counterweight assembly for balancing forces acting on the engine, wherein the third counterweight assembly is spaced from the crankshaft and the first counterweight assembly, wherein the third counterweight assembly includes at least a pair of third counterweights, wherein each of the third counterweights is mounted on a separate shaft, wherein each of the third counterweights is located on the same side of axis as the second counterweights.

6. The internal combustion engine according to claim 5, wherein at least one of the third counterweights is connected to the same shaft as one of the second counterweights, wherein the at least one third counterweight is spaced from and positioned at angle with respect to the second counterweight on the shaft.

7. The internal combustion engine according to claim 5, wherein at least one of the third counterweights is formed as a single unit with one of the second counterweights.

8. The internal combustion engine according to claim 5, wherein one of the third counterweights is located on one side of the plane and the other of the third counterweights is located on an opposite side of the plane.

9. The internal combustion engine according to claim 2, wherein one of the second counterweights is located on one side of the axis and the other of the second counterweights is located on an opposite side of the axis.

10. The internal combustion engine according to claim 9, wherein the internal combustion engine is a V-type internal combustion engine such the cylinders of the pair of cylinders are arranged at an angle with respect to each other.

11. The internal combustion engine according to claim 9, further comprising: a third counterweight assembly for balancing forces acting on the engine, wherein the third counterweight assembly is spaced from the crankshaft and the first counterweight assembly, wherein the third counterweight assembly includes at least a pair of third counterweights, wherein each of the third counterweights is mounted on a separate shaft, wherein each of the third counterweights is located on the same side of axis as one of the second counterweights.

12. The internal combustion engine according to claim 11, wherein at least one of the third counterweights is connected to the same shaft as one of the second countershafts, wherein the at least one third counterweight is spaced from and positioned at angle with respect to the second counterweight on that shaft.

13. The internal combustion engine according to claim 11, wherein at least one of the third counterweights is located on one side of the plane and the other of the third counterweights is located on an opposite side of the plane.

14. The internal combustion engine according to claim 11, wherein at least one of the third counterweights is formed as a single unit with one of the second counterweights.

15. The internal combustion engine according to claim 9, wherein the plane intersects the axis at a centerpoint, wherein a line extending through a center of mass of each of the second counterweights extends through the centerpoint.

16. The internal combustion engine according to claim 9, wherein the plane intersects the axis at a centerpoint, wherein a line extending through a center of mass of each of the second counterweights extends near the centerpoint.

17. The internal combustion engine according to claim 1, further comprising: a third counterweight assembly for balancing forces acting on the engine, , wherein the third counterweight assembly includes at least a pair of third counterweights, wherein each of the third counterweights is mounted on a separate shaft.

18. The internal combustion engine according to claim 17, wherein one of the shafts operates an engine component.

19. The internal combustion engine according to claim 18, wherein the engine component is one of a valve train, water pump and an engine accessory.

20. The internal combustion engine according to claim 1, wherein one of the shafts operates an engine component.

21. The internal combustion engine according to claim 20, wherein the engine component is one of a valve train, water pump and an engine accessory.

22. The internal combustion engine according to claim 1, wherein the internal combustion engine is a V-type internal combustion engine such the cylinders of the pair of cylinders are arranged at an angle with respect to each other.

23. A V-type internal combustion engine comprising:
at least one pair of cylinders, wherein each cylinder contains a piston movably mounted therein, wherein a plane extends between the at least two cylinders;
a crankcase;
a crankshaft rotatably mounted about an axis within the crankcase;
a crankpin spaced from the crankshaft;
a connecting rod corresponding to each cylinder, wherein each connecting rod is rotatably connected at one end to the crankpin and connected at an opposite end to the piston;
at least one crank web movably connecting the crankpin to the crankshaft;
a first counterweight assembly for balancing forces acting on the engine, wherein the first counterweight assembly is operatively connected to the at least one crank web;
a second counterweight assembly for balancing forces acting on the engine, wherein the second counterweight assembly is a spaced from the crankshaft and the first counterweight assembly, wherein the second counterweight assembly is located in the crankcase; and
a third counterweight assembly for balancing forces acting on the engine, wherein the third counterweight assembly is a spaced from the crankshaft and the first counterweight assembly, wherein the third counterweight assembly is located in the crankcase.

24. The internal combustion engine according to claim 23, wherein the second counterweight assembly includes at least a pair of second counterweights, wherein each counterweight assembly is mounted on a separate shaft, wherein one of the second counterweights is located on one side of the plane and the other of the second counterweights is located on an opposite side of the plane.

25. The internal combustion engine according to claim 24, wherein the plane intersects the axis at a centerpoint, wherein a line extending through a center of mass of each of the second counterweights extends through the centerpoint.

26. The internal combustion engine according to claim 25, wherein the internal combustion engine is a V-type internal combustion engine such the cylinders of the pair of cylinders are arranged at an angle with respect to each other.

27. The internal combustion engine according to claim 24, wherein the plane intersects the axis at a centerpoint, wherein a line extending through a center of mass of each of the second counterweights extends near the centerpoint.

28. The internal combustion engine according to claim 27, wherein the internal combustion engine is a V-type internal combustion engine such the cylinders of the pair of cylinders are arranged at an angle with respect to each other.

29. The internal combustion engine according to claim 24, wherein each of the second counterweights is located on a same side of the axis.

30. The internal combustion engine according to claim 24, wherein the third counterweight assembly includes at least a pair of third counterweights, wherein each of the third counterweights is located on the same side of axis as the second counterweights.

31. The internal combustion engine according to claim 30, wherein at least one of the third counterweights is connected to the one of the second counterweights through a common shaft, wherein the third counterweight is spaced from and positioned at angle with respect to the second counterweight on the shaft.

32. The internal combustion engine according to claim 30, wherein one of the third counterweights is located on one side of the plane and the other of the third counterweights is located on an opposite side of the plane.

33. The internal combustion engine according to claim 24, wherein one of the second counterweights is located on one side of the axis and the other of the second counterweights is located on an opposite side of the axis.

34. The internal combustion engine according to claim 33, wherein the third counterweight assembly includes at least a pair of third counterweights, wherein each of the third counterweights is located on the same side of axis as one of the second counterweights.

35. The internal combustion engine according to claim 34, wherein at least one of the third counterweights is connected to the one of the second counterweights through a common shaft, wherein the third counterweight is spaced from and positioned at angle with respect to the second counterweight on that shaft.

36. The internal combustion engine according to claim 35, wherein at least one of the third counterweight is formed as an integral unit with the second counterweight.

37. The internal combustion engine according to claim 23, wherein the internal combustion engine is a V-type internal combustion engine such the cylinders of the pair of cylinders are arranged at an angle with respect to each other.
